# EUROPÄISCHE PATENTANMELDUNG

(11) **EP 1 255 033 A2**
(43) Veröffentlichungstag der Anmeldung: **06.11.2002**
(21) Anmeldenummer: 02008548.6
(22) Anmeldetag: 16.04.2002
(51) Int. Cl.: F02D 19/06, F02D 41/06, F02D 41/30

(54) **Steuereinrichtung und Verfahren zum Einstellen einer insbesondere nachrüstbaren Steuereinrichtung, mit welcher eine mit flüssigem Kraftstoff betriebene Brennkraftmaschine nach Umschaltung auf einen Betrieb mit gasförmigem Kraftstoff gesteuert wird**

(30) Priorität: 04.05.2001 DE 10121609
(71) Anmelder: Vialkowitsch, Dirk, 72202 Nagold (DE)
(72) Erfinder: Vialkowitsch, Dirk, 72202 Nagold (DE)
(74) Vertreter: Maser, Jochen, Dipl.-Ing.

(57) **Zusammenfassung**

Die Erfindung betrifft ein Verfahren zum Einstellen einer insbesondere nachrüstbaren Steuereinrichtung, mit welcher eine mit flüssigem Kraftstoff betriebene Brennkraftmaschine (11) nach Umschaltung auf einen Betrieb mit gasförmigem Kraftstoff gesteuert wird, wobei in der Steuereinrichtung (51) eine Kaltstartbetriebsphase erfaßt wird, in welcher die an eine Kraftstoffart angepaßte spezifischen Parameter einer Brennkraftmaschine (11) bis zum Erreichen der Betriebstemperatur ausgegeben werden, die Brennkraftmaschine (11) nach Erreichen der Betriebstemperatur auf einen ersten Wert eines Sekundärdruckes zum Betrieb mit gasförmigem Kraftstoff eingestellt wird, eine Abgasmessung durchgeführt wird, in Abhängigkeit der Abgasmessung der Sekundärdruck beibehalten, erhöht oder gesenkt wird und nach Erreichen des optimalen Abgaswertes der Sekundärdruck ermittelt und abgespeichert wird.

## Beschreibung

Die Erfindung betrifft eine Steuereinrichtung und ein Verfahren zum Einstellen einer insbesondere nachrüstbaren Steuereinrichtung, mit welcher eine mit flüssigem Kraftstoff betriebene Brennkraftmaschine nach Umschaltung auf ein Betrieb mit gasförmigem Kraftstoff gesteuert wird.

Der Einsatz alternativer Energien zum Betrieb einer Brennkraftmaschine, insbesondere einer Brennkraftmaschine zum Antrieb eines Kraftfahrzeuges, gewinnt im Hinblick auf die begrenzten Rohölreserven und bezüglich der Einhaltung der vom Gesetzgeber vorgeschriebenen, immer niedriger werdenden Grenzwerte für die Schadstoffemission immer mehr an Bedeutung. Als eine Möglichkeit, herkömmliche flüssige Kraftstoffe wie Benzin oder Diesel als Antriebsenergie für Kraftfahrzeuge zumindest teilweise zu ersetzen, hat sich der Betrieb von Kraftfahrzeugen mit gasförmigem Kraftstoff erwiesen. Hierzu gehören vor allem das Liquified Petroleum Gas (LPG) und das Compressed Natural Gas (CNG). Diese gasförmigen Kraftstoffe weisen bezüglich ihrem Emissionsverhalten gegenüber mit flüssigem Kraftstoff betriebenen Fahrzeugen den Vorteil auf, daß eine Verringerung der ozonbildenden Emission um bis zu 80 % gegeben ist, daß eine praktisch vollständige Vermeidung von Ruß- und Schwefeldioxid-Emissionen sowie Aromaten als auch eine deutliche Verringerung der Geräuschemission aufgrund der weicheren Verbrennung und eine Reduzierung von CO₂ und anderen Klima beeinflussenden Emissionen gegenüber dem Benzinantrieb gegenüber 25 % und der Ausstoß um bis zu 10 % weniger CO₂ im Vergleich zum Dieselkraftstoff gegeben ist.

Um zusätzlich zum Betrieb eines Fahrzeuges mit flüssigem Kraftstoff auch den Betrieb mit gasförmigem Kraftstoff zu ermöglichen, wird in der Regel das standardmäßig mit einer Einrichtung für den flüssigen Kraftstoffbetrieb ausgerüstete Kraftfahrzeug mit einer Gasanlage auf bivalenten Betrieb nachgerüstet. Neben den für die Speicherung für Teilung und Abgabe des gasförmigen Kraftstoffes notwendigen Komponenten, wie beispielsweise Gastank mit Armaturenleitungen, Druckgeber, Einspritzsystem, Umschalter vom flüssigen auf gasförmigen Kraftstoff, ist auch eine zusätzliche elektronische Steuereinrichtung mit zugehörigen Sensoren und Aktuatoren notwendig, die den Betrieb mit gasförmigem Kraftstoff steuert.

Eine derartige Anordnung eines für den flüssigen Kraftstoff ausgerichteten Kraftfahrzeuges mit einer nachgerüsteten Anlage für den Betrieb von gasförmigem Kraftstoff auf bivalenter Basis ist aus der EP 0 323 413 bekannt.

In modernen Kraftfahrzeugen wird der flüssige Kraftstoff diskret über Düsen eingespritzt. Die eingespritzte Menge an Kraftstoff wird durch ein Motorsteuergerät berechnet, welches mehrere Signale verarbeitet, wie beispielsweise die aktuelle Drehzahl, den Saugrohrdruck, die Gaspedalstellung, das Lambdasignal, die Motortemperatur, die Lufttemperatur. Aus diesen Signalen wird im Motorsteuergerät ein Einspritzsignal erzeugt, welches auf die Einspritzdüsen unmittelbaren Einfluß hinsichtlich der Einspritzdauer aufweist. Insbesondere bei Kraftfahrzeugen mit Katalysatoren, wie dies bei modernen Fahrzeugen ausschließlich der Fall ist, sind einspritzgesteuerte Brennkraftmaschinen unumgänglich.

Die aus der EP 0 323 413 bekannte Anordnung weist den Nachteil auf, daß nur eine spezifische Anwendung für die Umschaltung von einer benzinbetriebenen Brennkraftmaschine auf eine mit Flüssiggas betriebene Brennkraftmaschine möglich ist. Dabei ist erforderlich, daß sowohl das Benzin als auch das Flüssiggas durch eine einzige Einspritzdüse hindurch befördert wird, so daß insbesondere in Phasen der Umschaltung Probleme auftreten können. Des weiteren ist die Steuerung durch den Verstärker nicht hinreichend für eine geeignete Ansteuerung der Einspritzimpulse für eine optimierte Abgasgemischregelung geeignet. Derzeitige Abgasnormen können mit einer derartigen Steuerung nicht erfüllt werden. Des weiteren setzt diese Anlage bei dem Betrieb mit Flüssiggas voraus, daß die Brennkraftmaschine auf Betriebstemperatur ist, bevor die Umschaltung und der Betrieb mit Flüssiggas erfolgt. Weitere Betriebszustände können nicht eingestellt und gesteuert werden.

Der Erfindung liegt deshalb die Aufgabe zugrunde, eine Steuereinrichtung sowie ein Verfahren zum Einstellen einer insbesondere nachrüstbaren Steuereinrichtung, mit welcher eine mit flüssigem Kraftstoff betriebene Brennkraftmaschine nach Umschaltung auf einen Betrieb mit gasförmigem Kraftstoff gesteuert wird, zu schaffen, bei dem eine kostengünstige Erstausstattung als auch Umrüstung sowie eine schnelle und einfache Einstellung auf die zu steuernde Brennkraftmaschine ermöglicht ist und eine hohe Betriebssicherheit in der Kaltstartphase als auch in den weiteren wechselnden Betriebsphasen gegeben ist.

Diese Aufgabe wird erfindungsgemäß durch eine Steuereinrichtung und ein Verfahren zur Einstellung einer insbesondere nachrüstbaren Steuereinrichtung gemäß den Merkmalen des Anspruchs 1 und des Anspruchs 5 gelöst.

Die erfindungsgemäße Steuereinrichtung weist den Vorteil auf, daß alle gasförmigen Kraftstoffe für die Brennkraftmaschine als alternativer Kraftstoff eingesetzt und gesteuert werden können und sowohl die Betriebsparameter eines Motorsteuergeräts für eine mit Benzin oder Diesel betriebene Brennstoffmaschine verwendet werden können.

Des weiteren ist vorteilhafterweise vorgesehen, daß sowohl ein automatisches Starten in der Kaltstartphase durch Verwendung von flüssigem Kraftstoff als auch von gasförmigem Kraftstoff einstellbar ist. Die entsprechende Steuerung der Einspritzimpulse und die Abfrage der jeweiligen Signale sind in der Steuereinrichtung hinterlegt. Des weiteren weist diese Steuereinrichtung den Vorteil auf, daß beispielsweise bei einer Vollast ein automatisches Umschalten des Betriebes von gasförmigem Kraftstoff auf flüssigen Kraftstoff erfolgt, da die maximale Leistung durch den gasförmigen Kraftstoffbetrieb derzeit noch nicht erreicht wird. Eine weitere vorteilhafte Ausgestaltung der Steuereinrichtung ist dadurch gegeben, daß die Originalsignale der Motorsteuerung für den flüssigen Brennstoff verwendet werden, um die Einspritzimpulse für den gasförmigen Kraftstoff zu bestimmen. Dafür ist vorteilhafterweise vorgesehen, daß Korrekturfaktoren in dem Prozessor hinterlegt sind oder daß über einen Regelkreis der Korrekturfaktor an die aktuelle Betriebssituation angepaßt wird. Des weiteren ist vorteilhafterweise vorgesehen, daß bei einem niedrigen Füllstand der jeweiligen Kraftstoffart eine automatische Umschaltung auf die andere Kraftstoffart erfolgt. Darüber hinaus ist auch ermöglicht, daß eine wahlweise Umschaltung für den Betrieb der Brennkraftmaschine durch den Fahrzeugführer ermöglicht ist. Die erfindungsgemäße Steuereinrichtung kann sowohl als Umrüst- oder Nachrüstmodul vorgesehen sein als auch bei der Erstausstattung für die Auslieferung von Brennkraftmaschinen mit gasförmigem oder flüssigem Kraftstoff vorgesehen sein.

Die erfindungsgemäße Aufgabe wird des weiteren durch ein Verfahren zum Einstellen einer insbesondere nachrüstbaren Steuereinrichtung gemäß den Merkmalen des Anspruchs 5 gelöst.

Durch dieses Verfahren kann in einfacher und schneller Weise eine Anpassung der Steuereinrichtung an die Betriebsparamenter einer Brennkraftmaschine erfolgen, unabhängig davon, ob diese Steuereinrichtung als sogenanntes Umrüstmodul in eine mit flüssigem Kraftstoff betriebene Brennkraftmaschine nachgerüstet oder als Erstausstattung eingebaut wird. Durch dieses Verfahren werden die spezifischen Parameter der Brennkraftmaschine unmittelbar in der Steuereinrichtung erfaßt und für die Steuerung der Brennkraftmaschine in den unterschiedlichen Betriebsphasen entsprechend ausgegeben. Zur Einstellung der Steuereinrichtung auf die zu steuernde Brennkraftmaschine werden zumindest zwei Parameter eingestellt. Ein erster Parameter beinhaltet die Steuerung der Kaltstartphase und ein zweiter Parameter beinhaltet die Einstellung eines Sekundärdruckes für den gasförmigen Kraftstoff bei einer Betriebstemperatur der Brennkraftmaschine.

Die Kaltstartphase kann vorteilhafterweise derart eingestellt werden, daß die Brennkraftmaschine mit flüssigem Kraftstoff versorgt wird. Dies weist den Vorteil auf, daß eine schnellere Erwärmung der Abgasanlage gegeben ist, da flüssige Kraftstoffe heißere Abgase erzeugen und so der Katalysator schneller warm wird. Hierfür kann vorteilhafterweise vorgesehen sein, daß eine statische Kaltstart-Verzögerungsumschaltung erfolgt, in dem nach Ablauf einer vorbestimmten Zeit eine automatische Umschaltung von dem flüssigen Kraftstoff auf den gasförmigen Kraftstoff erfolgt. Geeigneterweise ist dieser Zeitpunkt derart gewählt, daß die Brennkraftmaschine in den allermeisten Fällen die Betriebstemperatur erreicht hat.

Alternativ zu dieser statischen Verzögerungsumschaltung ist auch eine dynamische Verzögerungsumschaltung vorgesehen. Hierfür wird vorteilhaftweise ein Temperaturfühler zur Erfassung der aktuellen Temperatur der Brennkraftmaschine vorgesehen, welcher nach Erreichen der Betriebstemperatur ein Signal für die Umschaltung auf den gasförmigen Betrieb an die Steuerung abgibt. Es kann hierbei ebenso vorgesehen sein, daß bei Abfallen der Betriebstemperatur der Brennkraftmaschine wiederum automatisch von dem gasförmigen Kraftstoffbetrieb auf den flüssigen Kraftstoffbetrieb umgeschalten wird, bis die Betriebstemperatur wiederum erreicht ist. Insbesondere beim Abstellen des Fahrzeuges und einem Neustart kann diese dynamische Verzögerungsumschaltung vorteilhafterweise eingesetzt werden.

Alternativ kann in der Kaltstartphase auch der gasförmige Kraftstoff verwendet werden. Hierfür ist vorteilhafterweise vorgesehen, daß die motorspezifischen Parameter für den flüssigen Kraftstoff ausgewertet werden, um die Einspritzimpulse für den gasförmigen Kraftstoff zu verwenden. In der Kaltstartphase wird das eingespritzte flüssige Kraftstoffgemisch durch eine zusätzliche flüssige Kraftstoffmenge angereichert. Dieser Faktor der angereicherten Mengen kann erfaßt werden, so daß durch eine berechnete Verkürzung der Einspritzimpulse durch diesen Faktor die entsprechende gasförmige Menge an Kraftstoff eingespritzt wird, da im Gasbetrieb eine Anreicherung des Kraftstoffes nicht erforderlich ist.

Alternativ zu dieser Vorgehensweise kann für den Betrieb des gasförmigen Kraftstoffs in der Kaltstartphase die Verzögerungsumschaltung dadurch gegeben sein, daß mit einem Temperaturfühler der aktuelle Wert der Brennkraftmaschine ermittelt wird. Solange dieser Temperaturwert niedriger als die Betriebstemperatur der Brennkraftmaschine ist, wird an die Motorsteuerung ein quasi gefälschter Wert weitergeben, der der Betriebstemperatur der Brennkraftmaschine entspricht. Sobald die tatsächliche Temperatur der Brennkraftmaschine der Betriebstemperatur entspricht, wird der tatsächliche Wert an das Motorsteuergerät weitergegeben, so daß eine Überhitzungsüberwachung wiederum gegeben ist. Durch diese Verfahrensweise findet eine Kaltstartanreicherung des Gemisches nicht statt, so daß eine Korrektur der angereicherten Kaltstartmenge in diesem Fall nicht erforderlich ist.

Der zumindest zweite zum Einstellen der Steuereinrichtung auf die zu steuernde Brennkraftmaschine einzustellende Parameter wird nach Erreichen der Betriebstemperatur der Brennkraftmaschine durchgeführt. Vorteilhafterweise wird ein Signalprozessor der Steuereinrichtung deaktiviert, so daß die Einspritzimpulse für den gasförmigen Kraftstoff dem des flüssigen Kraftstoffes entsprechen. Gleichzeitig wird ein Sekundärdruck der Gaszuführleitung auf einen vorbestimmten Arbeitsdruck eingestellt. Im Anschluß daran wird das Fahrzeug einer Abgasüberprüfung unterzogen und in Abhängigkeit eines zu fetten oder eines zu mageren Gemisches der Einstellvorgang korrigiert, so daß ein optimales Abgasgemisch vorliegt.

Die Einstellung der Steuereinrichtung kann in Abhängigkeit des Fahrzeugtyps beziehungsweise der Größe der Brennkraftmaschine durch einen weiteren Parameter dahingehend modifiziert werden, daß ein Korrekturfaktor für den Signalprozessor eingelesen oder eingeregelt wird, um bei Abweichungen des optimalen Abgasgemischwertes entsprechend nachzuregeln.

Weitere vorteilhafte Ausgestaltungen und Weiterbildungen sind in den weiteren Ansprüchen angegeben.

Anhand der nachfolgenden Zeichnungen ist eine vorteilhafte Ausgestaltung der Erfindung und deren Varianten näher beschrieben. Es zeigen:
- Figur 1: eine schematische Anordnung einer Brennkraftmaschine mit zwei getrennten Kraftstoffkreisen zum Betrieb mit unterschiedlichen Kraftstoffarten,
- Figur 2: eine schematische Darstellung der erfindungsgemäßen Steuereinrichtung und
- Figur 3: ein Ablaufdiagramm für einen möglichen Betrieb der Brennkraftmaschine mit flüssigem und gasförmigem Kraftstoff.

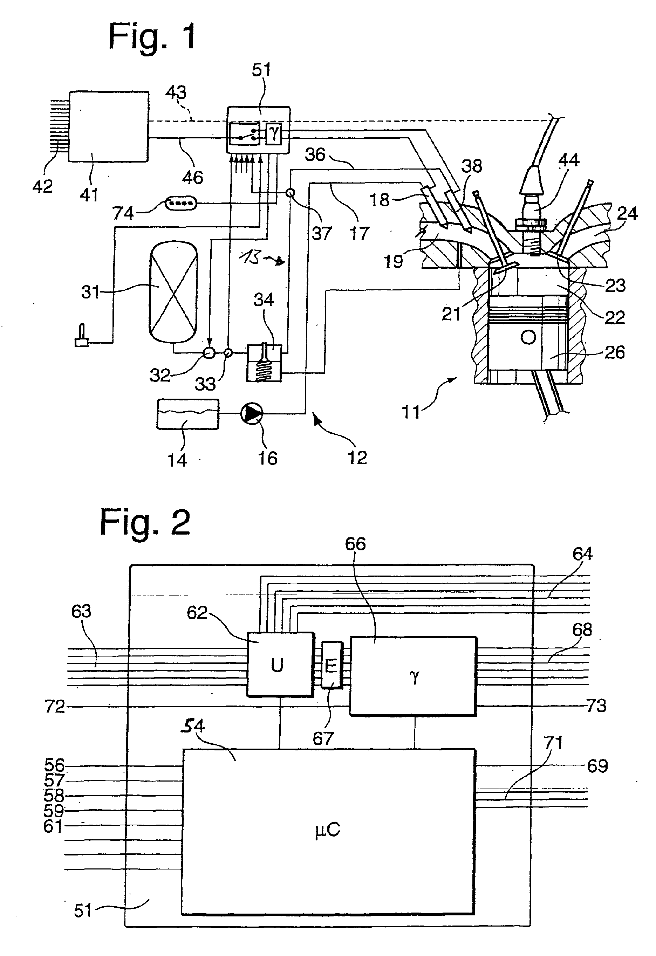

Figur 1 zeigt eine schematische Darstellung eines Teils einer Brennkraftmaschine 11 mit einem ersten Kraftstoffkreis 12 für flüssigen Kraftstoff und einem weiteren Kraftstoffkreis 13 für gasförmigen Kraftstoff. Als flüssiger Kraftstoff kann sowohl Benzin als auch Diesel verwendet werden. In einem Tank 14 ist der flüssige Kraftstoff bevorratet und wird über eine Förderpumpe 16 und eine Förderleitung 17 einer Einspritzdüse 18 zugeführt. Die Einspritzdüse 18 mündet in den Saugrohrkanal 19, in welchem das Kraftstoffluftgemisch aufbereitet wird. Durch ein Einlaßventil 21 gelangt das Kraftstoffgemisch in einen Brennraum 22 der Brennkraftmaschine 11 und wird über ein Auslaßventil 23 nach der Verbrennung in eine Abgasanlage 24 über einen Kolben 26 gefördert.

Der weitere Kraftstoffkreis 13 weist einen Druckbehälter 31 zur Speicherung von gasförmigem Kraftstoff auf. Als gasförmiger Kraftstoff können die im Handel erhältlichen Gasarten verwendet werden. Hierzu gehören vor allem Flüssiggas und Erdgas. Über ein Gashauptventil 32 und einen Primärdrucksensor 33 wird der gasförmige Kraftstoff einem Druckminderer 34 zugeführt, um den hohen Speicherdruck von beispielsweise 200 bar im Druckbehälter 31 zur Weiterbeförderung in die Einspritzdüse 38 zu reduzieren. In einer Sekundärdruckleitung 36 ist ein Sekundärdrucksensor 37 vorgesehen. Der gasförmige Kraftstoff wird über eine weitere Einspritzdüse 38 dem Saugrohr 19 zugeführt.

Die Brennkraftmaschine 11 weist ein Steuergerät 41 auf, welchem über Leitungen 42 Eingangssignale zugeführt werden. Des weiteren ist das Motorsteuergerät 41 mit einem Zündkabel 43 zur Ansteuerung von Zündkerzen 44 verbunden. Des weiteren ist eine Steuerleitung 46 vorgesehen, welche von dem Motorsteuergerät 41 zur Einspritzdüse 18 führt.

Die Brennkraftmaschine 11 weist vor der Umrüstung oder Erstausstattung zum Betrieb mit gasförmigem Kraftstoff die in dem ersten Kraftstoffkreis 12 enthaltenen Komponenten sowie das Motorsteuergerät 41 und die Steuerleitungen 43 und 46 zur Einspritzdüse 18 und zur Zündkerze 44 auf. Des weiteren sind weitere Signalgeber und Sensoren mit dem Motorsteuergerät 41 verbunden, welche zur optimalen Anreicherung eines Kraftstoffluftgemisches für flüssigen Kraftstoff zur emissionsarmen Verbrennung dienen. Hierzu gehören unter anderem das Drehzahlsignal, das Lambdasignal, die Gaspedalstellung, die Motortemperatur, die Lufttemperatur, die Luftmenge.

Die Nachrüstung, Umrüstung oder zusätzliche Einrichtung der Brennkraftmaschine 11 zum Betrieb mit einer weiteren Kraftstoffart erfolgt durch den Einbau der Komponenten des zweiten Kraftstoffkreises 13 sowie einer Steuereinrichtung 51. Dieser Steuereinrichtung 51 werden Signale von dem Primärdrucksensor 33 und dem Sekundärdrucksensor 37 zugeführt. Darüber hinaus greift die Steuereinrichtung 51 Daten des Motorsteuergeräts 41 ab, um nach Umschaltung vom flüssigen Kraftstoffbetrieb auf gasförmigen Kraftstoffbetrieb die Einspritzimpulse für den gasförmigen Kraftstoff zu steuern.

In Figur 2 ist die Steuereinrichtung schematisch dargestellt. Diese weist einen Prozessor 54 auf, in welchem die einzelnen Daten und Faktoren erfaßt und gespeichert sind. Dem Prozessor 54 werden gemäß den symbolisch dargestellten Leitungen Informationen zugeführt, wobei beispielsweise über die Leitung 56 ein Primärdruckeingangssignal, über die Leitung 57 ein Sekundärdruckeingangssignal, über die Leitung 58 die Motortemperatur, über die Leitung 59 ein Zündsignal und über die Leitung 61 ein Drehzahlsignal zugeführt werden. Weitere Informationen können ebenfalls bei Bedarf eingespeist werden. Des weiteren weist die Steuereinrichtung eine Umschalteinheit 62 auf, welches einerseits Einspritzsignale 63 vom Motorsteuergerät empfängt und andererseits Benzineinspritzsignale über die Leitungen 64 ausgibt. Die Umschalteinheit 62 kann mechanisch als Relais oder dergleichen oder elektrisch als Transistor oder dergleichen ausgebildet sein. Ein Signalprozessor 66 ist mit dem Prozessor 54 verbunden und Emulationswiderständen 67 nachgeschalten, welche wiederum der Umschalteinheit 62 nachgeschalten sind. Dieser Signalprozessor 66 gibt in Abhängigkeit der im Logikprozessor 54 ermittelten und erfaßten Randbedingungen und zugrundeliegenden Korrekturfaktoren Gaseinspritzsignale 68 zur Steuerung der Einspritzdüsen 38 aus.

Der Prozessor 54 steuert des weiteren über die Leitung 69 das Gashauptventil und gibt Informationen zur Betriebszustandsanzeige über die Leitungen 71 weiter.

In dem Signalprozessor 66 werden darüber hinaus die Originalzündsignale 72 verarbeitet und bei Betrieb mit flüssigem Kraftstoff in das Benzinzündsignalkabel 73 eingespeist.

Beim flüssigen Kraftstoffbetrieb schaltet der Logikprozessor 54 über die Leitung 69 das Gashauptventil 32 ab. Die Einspritzsignale 63 werden durch die Umschalteinheit 62 direkt auf die Einspritzdüse 18 gelegt. Es findet keine Signalwandlung statt. Auch das Zündsignal 72 wird direkt auf die Zündkerze 44 durchgeleitet. In einem Anzeigemodul 74 wird die Betriebsart Benzin/Diesel angezeigt.

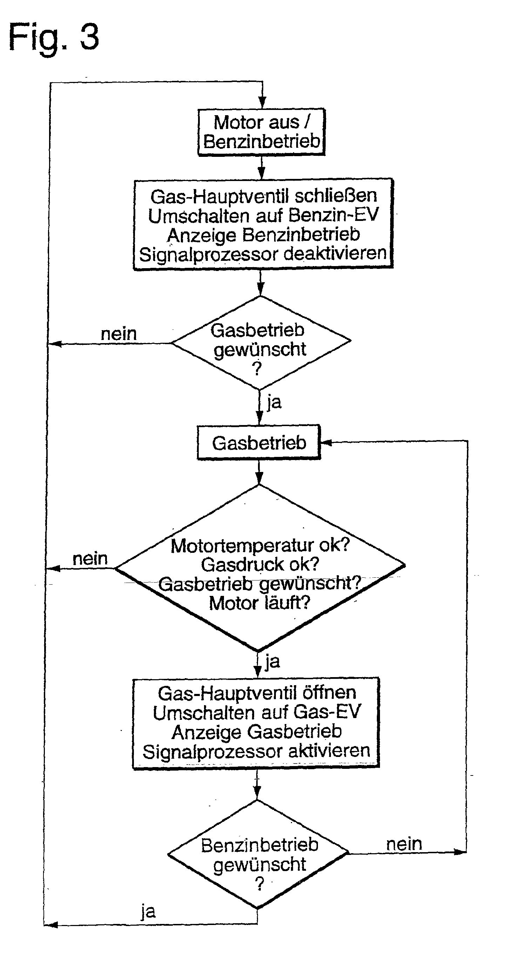

Eine Umschaltung auf den Betrieb mit gasförmigem Kraftstoff wird unter Berücksichtigung des Ablaufdiagrammes in Figur 3 näher beschrieben.

Eine Umschaltung auf den Betrieb mit gasförmigem Kraftstoff ist nur dann möglich, wenn in dem Druckbehälter 31 mindestens der erforderliche Minimaldruck vorhanden ist. Dies wird über den Primärdrucksensor 33 überwacht. Bei einer ersten Kaltstartstrategie erfolgt der Betrieb im Kaltstart mit flüssigem Kraftstoff. Der Betrieb der Brennkraftmaschine 11 mit gasförmigem Kraftstoff wurde nur nach Erreichen der erforderlichen Betriebstemperatur der Brennkraftmaschine 11 ermöglicht.

Alternativ ist vorgesehen, daß auch ein Kaltstartbetrieb mit gasförmigem Kraftstoff ermöglicht ist. Des weiteren kann vorgesehen sein, daß bei einem Abfall des Drucks in dem Druckbehälter 31 unter einen erforderlichen Wert automatisch durch die Steuereinrichtung 51 eine Umschaltung auf flüssigen Kraftstoff erfolgt. Des weiteren ist durch die Steuereinrichtung 51 vorgesehen, daß bei der Durchführung eines Warmstarts, das heißt, der Motor wird gestartet und weist die erforderliche Betriebstemperatur auf, sofort auf Gas umgeschaltet wird.

Sobald der Gasbetrieb gewählt wird, schaltet der Logikprozessor 51 über die Leitung 69 das Gashauptmagnetventil 32 ein. Die Einspritzsignale 63 werden durch die Umschalteinheit 62 von den flüssigen Kraftstoffeinspritzdüsen getrennt und auf die Emulationswiderstände 67 und den Signalprozessor 66 gelegt. Dort werden die Einspritzsignale entsprechend dem Betriebszustand verlängert oder verkürzt und auf die Einspritzdüsen 38 für gasförmigen Kraftstoff gegeben. Auch das Zündsignal 72 wird über den Signalprozessor 66 verändert und erst dann auf die Zündkerze 44 geleitet. Das Anzeigemodul 74 zeigt die Betriebsart Gas an sowie den Füllstand des Druckbehälters 31. Das Motorsteuergerät 41 regelt weiterhin den Betrieb des Motors mittels der Eingangssignale 42. Diese Signale, wie beispielsweise Saugrohrdruck, Drehzahlsignal, Lambdasignal, Gaspedalstellung, Motortemperatur, Lufttemperatur usw., werden im Motorsteuergerät 41 in ein dem aktuellen Betriebszustand angepaßtes Einspritzsignal umgewandelt. Auch die Rückkoppelung über die Lambdasonde wird verwertet. Die Steuereinrichtung 51 wandelt diese Signale lediglich um und gibt sie an die Zündkerzen 44 und Einspritzdüsen 38 weiter. Diese Wandlung wird sich im allgemeinen auf ein proportionales Verlängern oder Verkürzen der Einspritzzeiten beschränken. Darüber hinaus können auch die Einspritzdrücke des gasförmigen Kraftstoffes geändert werden beziehungsweise es kann auch eine Kombination von Änderung und Anpassung der Einspritzzeit und der Einspritzdrücke gegeben sein, um einen an den aktuellen Betriebszustand angepaßten Einspritzimpuls zu erzeugen.

Die Steuereinrichtung 51 benötigt für die Steuerung der Brennkraftmaschine 11 mit gasförmigem Kraftstoff das Originalzündsignal zur Veränderung des Zündzeitpunktes, die Einspritzsignale vom Motorsteuergerät zur Wandlung/Durchschaltung auf die entsprechenden Einspritzdüsen, den Primärgasdruck zur Füllstandsermittlung, den Sekundärgasdruck zur Angleichung der Einspritzsignale, die Motortemperatur für den Kaltstart, die Zündung zur Initialisierung und das Drehzahlsignal zur Erkennung, ob der Motor läuft. Dadurch kann die Steuereinrichtung 51 erkennen, ob der Motor läuft oder nicht. Bei einem Unfall kann dann sofort das Gashauptventil 32 abgeschalten werden. Des weiteren kann dadurch erzielt werden, daß bei dem Wunsch, die Brennkraftmaschinen mit Vollast zu betreiben, sporadisch von einem gasförmigen Kraftstoffbetrieb auf den flüssigen Kraftstoffbetrieb umgeschalten werden kann. Ebenso ist eine manuelle wahlweise Umschaltung der beiden Betriebsarten durch einen Schalter ermöglicht. Darüber hinaus wird beim Abschalten der Einspritzdüsen für den flüssigen Kraftstoff eine Ersatzlast (Emulationswiderstände) gegeben, da ansonsten ein fehlerhafter Betriebszustand von dem Motorsteuergerät erkannt werden würde.

Zur Einstellung der Steuereinrichtung 51 werden entsprechend der Kaltstartstrategie die entsprechenden Werte in dem Prozessor erfaßt. Im Anschluß daran wird der Sekundärdruck eingestellt, damit optimale Abgaswerte ermittelt werden. Dies kann in Abhängigkeit der Verwendung von Flüssiggas oder Erdgas erfolgen, daß bei Flüssiggas die Zuführung im flüssigen Zustand erfolgt und bei Erdgas im gasförmigen Zustand und die Drücke zur Speicherung der Gase und Förderung in der Förderleitung 36 unterschiedlich sind. Nachdem der Signalprozessor 66 deaktiviert ist und die Brennkraftmaschine auf Betriebstemperatur ist, wird der Sekundärdruck beispielsweise auf 8 bar als zunächst idealer Arbeitsdruck eingestellt. Nachdem die Abgasprüfung ergibt, daß das Gemisch zu fett ist, das heißt, daß das Gemisch über die erforderlichen Mengen von Gas eine Anreicherungsmenge an Gas aufweist, wird der Sekundärdruck um beispielsweise 0,5 bar bis 1 bar vermindert. Die Abgasprüfung wird erneut durchgeführt. Sollten die Abgaswerte nicht in Ordnung sein, wird in Abhängigkeit davon, ob das Gemisch zu fett oder zu mager ist, der Sekundärdruck vermindert oder weiter erhöht. In Abhängigkeit des Gemisches wird eine entsprechende Nachregulierung erfolgen, wobei die Erhöhung oder Erniedrigung des Sekundärdruckes immer mehr reduziert wird, so daß eine Annäherung in einem oder mehreren Schritten auf optimale Abgaswerte erfolgt.

Im Anschluß daran kann in Abhängigkeit der Größe der Motoren ein Korrekturfaktor festgelegt werden. Bei Brennkraftmaschinen bis zu einem Hubraum von beispielsweise 1,6 oder 1,8 Litern kann der Korrekturfaktor entfallen. Dies liegt daran, daß durch die Lambdarückkopplung eine Eigenkorrektur des Verbrennungsvorganges gegeben ist. Die Lambdasonde mißt ständig das Gemisch von Luft und flüssigem Kraftstoff im Abgas. Das Motorsteuergerät 41 erkennt sofort zu fettes oder zu mageres Gemisch und korrigiert dies durch Anpassung der Einspritzzeit und/oder des Einspritzdruckes. Diese Regelung funktioniert geräteabhängig in einem bestimmten Lambdafenster. Solange diese Korrektur innerhalb dieses Lambdafensters erfolgt, ist die Hinzuziehung eines Korrekturfaktores nicht erforderlich. Bei Brennkraftmaschinen mit zumeist größerem Hubraum kann jedoch eine Abweichung außerhalb eines derartigen Lambdafensters gegeben sein, so daß hierfür zusätzlich die Festlegung eines Korrekturwertes vorgesehen ist, der in Abhängigkeit der Werte durch die Lambdarückkoppelung im Gasbetrieb die Einspritzimpulse verlängert oder verkürzt. Dies kann durch einen festen Korrekturwert gegeben sein, der empirisch ermittelt wurde. Alternativ kann auch ein Regel- und Steuerkreis vorgesehen sein, wie beispielsweise durch einen Vergleich durch zwei Lambdasonden, so daß eine quasi modifizierte Eigenkorrektur erfolgt.

Des weiteren ist aufgrund der Ausgestaltung eines ersten und zweiten Kraftstoffkreises 12 und 13 für flüssigen und gasförmigen Kraftstoff ein Mischbetrieb der Kraftstoffe für die Brennkraftmaschine ermöglicht.

Beispielsweise kann die Brennkraftmaschine mit 30 % Dieselkraftstoff und 70 % Gas betrieben werden. Im übrigen bleiben die Funktionen erhalten, wie beispielsweise die Überlagerung der Einspritzimpulse mittels eines Korrekturfaktors, um optimale Verhältnisse für die Verbrennung und das Abgasgemisch zu erhalten.

## Patentansprüche

1. Steuereinrichtung zur Steuerung zumindest eines Signals für zumindest eine Einspritzdüse für eine Brennkraftmaschine, welche mit flüssigem oder gasförmigem Kraftstoff betrieben ist, **dadurch gekennzeichnet,**
- **daß** zumindest ein Prozessor (54) vorgesehen ist, der Eingangssignale für den Gasbetrieb verarbeitet,
- **daß** zumindest eine Umschalteinheit (62) vorgesehen ist, welche mit dem Prozessor (54) gekoppelt ist und zumindest ein Einspritzsignal von einem Motorsteuergerät (41) für flüssigen Kraftstoff verarbeitet und als Einspritzsignal für flüssigen Kraftstoff oder gasförmigen Kraftstoff an zumindest eine Einspritzdüse weiterleitet.

2. Steuereinrichtung nach Anspruch 1, **dadurch gekennzeichnet, daß** die Umschalteinheit (62) einem Signalprozessor (66) vorgeschalten ist, welche mit dem Prozessor (54) gekoppelt oder integriert ist und die vom Prozessor (54) erfaßten Eingangssignale verarbeitet, die Originalsignale umwandelt und als Einspritzsignale für gasförmigen Kraftstoff an eine Einspritzdüse (38) für gasförmigen Kraftstoff weiterleitet.

3. Steuereinrichtung nach Anspruch 1 oder 2, **dadurch gekennzeichnet, daß** zwischen der Umschalteinheit (62) und dem Signalprozessor (66) Emulationswiderstände (67) vorgesehen sind.

4. Steuereinrichtung nach einem der vorhergehenden Ansprüche, **dadurch gekennzeichnet, daß** Schnittstellen zum Empfang und Abgabe von Signalen, insbesondere Einspritzsignale für flüssigen oder gasförmigen Kraftstoff, primäre und sekundäre Einspritzsignale, Motorenregelung, Drehzahlsignal, Zündsignal, Signaldruck für Gaspedalstellung, Lambdasignal, vorgesehen sind.

5. Verfahren zum Einstellen einer insbesondere nachrüstbaren Steuereinrichtung, mit welcher eine mit flüssigem Kraftstoff betriebene Brennkraftmaschine (11) nach Umschaltung auf einen Betrieb mit gasförmigem Kraftstoff gesteuert wird, **dadurch gekennzeichnet,**
- **daß** in der Steuereinrichtung (51) eine Kaltstartbetriebsphase erfaßt wird, in welcher die an eine Kraftstoffart angepaßte spezifischen Parameter einer Brennkraftmaschine (11) bis zum Erreichen der Betriebstemperatur ausgegeben werden,
- **daß** die Brennkraftmaschine (11) nach Erreichen der Betriebstemperatur auf einen ersten Wert eines Sekundärdruckes zum Betrieb mit gasförmigem Kraftstoff eingestellt wird,
- **daß** eine Abgasmessung durchgeführt wird,
- **daß** in Abhängigkeit der Abgasmessung der Sekundärdruck beibehalten, erhöht oder gesenkt wird,
- **daß** nach Erreichen des optimalen Abgaswertes der Sekundärdruck ermittelt und abgespeichert wird.

6. Verfahren nach Anspruch , **dadurch gekennzeichnet, daß** die Kaltstartphase für den Betrieb mit flüssigem Kraftstoff durch eine Kaltstart-Verzögerungsumschaltung gesteuert wird, durch welche nach Ablauf einer wahlweisen vorbestimmten Zeit, die in der Steuereinrichtung eingestellt wird, der Betrieb von flüssigem Kraftstoff auf gasförmigen Kraftstoff umgeschalten wird.

7. Verfahren nach Anspruch 5, **dadurch gekennzeichnet, daß** die Kaltstartphase für den Betrieb mit flüssigem Kraftstoff durch eine Kaltstart-Verzögerungsumschaltung gesteuert wird, bei der die Betriebstemperatur der Brennkraftmaschine mit einem Sensor erfaßt wird und nach Erreichen der Betriebstemperatur der Betrieb von flüssigem Kraftstoff auf gasförmigen Kraftstoff umgeschalten wird.

8. Verfahren nach Anspruch 5, **dadurch gekennzeichnet, daß** die Kaltstartphase für den Betrieb mit gasförmigem Kraftstoff mit den Parametern für den Betrieb der Brennkraftmaschine mit flüssigem Kraftstoff gesteuert wird, wobei ein Betrag einer Anreicherungsmenge des zugeführten flüssigen Kraftstoffes für einen fetten Verbrennungsübergang ermittelt wird und ein Einspritzimpuls des gasförmigen Kraftstoffs um diesen Betrag verkürzt wird.

9. Verfahren nach Anspruch 5, **dadurch gekennzeichnet, daß** die Einspritzmenge durch Änderung der Einspritzdauer und/oder des Einspritzdruckes des gasförmigen Kraftstoffes eingestellt wird.

10. Verfahren nach Anspruch 5, **dadurch gekennzeichnet, daß** die Kaltstartphase für den Betrieb mit gasförmigem Kraftstoff durch Abfrage der tatsächlichen Temperatur der Brennkraftmaschine mit einem Temperatursensor gesteuert wird, wobei bei einer erfaßten Temperatur unterhalb der Betriebstemperatur der Brennkraftmaschine (11) ein Wert der Steuereinrichtung (51) an eine Motorsteuerung (41) weitergeleitet wird, der dem Wert der Betriebstemperatur der Brennkraftmaschine entspricht.

11. Verfahren nach Anspruch 5, **dadurch gekennzeichnet, daß** der Sekundärdruck bei einem zu fetten Gemisch erhöht oder bei einem zu mageren Gemisch um einen Wert erniedrigt wird und erneut eine Abgasmessung durchgeführt wird.

12. Verfahren nach Anspruch 5, **dadurch gekennzeichnet, daß** von einem Signalprozessor (66) Einspritzimpulse ausgegeben werden, welche in Abhängigkeit des Abgasgemisches oder des Betriebszustandes mit einem Korrekturfaktor beaufschlagt werden, wodurch der Einspritzimpuls verlängert oder verkürzt oder beibehalten wird.

13. Verfahren nach Anspruch 12, **dadurch gekennzeichnet, daß** der Korrekturfaktor als eine feste, im Signalprozessor (66) abgelegte Größe ausgegeben wird oder als eine variable Größe in Abhängigkeit der tatsächlichen Parameter angepaßt und ausgegeben wird.

14. Verfahren nach Anspruch 5, **dadurch gekennzeichnet, daß** ein Mischbetrieb mit flüssigem und gasförmigem Kraftstoff angesteuert wird und vorzugsweise der jeweilige Einspritzimpuls für den flüssigen und gasförmigen Kraftstoff in Abhängigkeit des Betriebszustandes mit einem Korrekturfaktor beaufschlagt wird.
